# EUROPEAN PATENT APPLICATION

(11) **EP 2 040 101 A1**
(43) Date of publication of application: **25.03.2009**
(21) Application number: 07744282.0
(22) Date of filing: 28.05.2007
(51) Int. Cl.: G02B 5/30, B32B 27/36

(54) **BASE FILM FOR PROTECTIVE FILM AND PROTECTIVE FILM COVERED POLARIZING PLATE**

(30) Priority: 29.05.2006 JP 2006147634
(71) Applicant: Toyo Kohan Co., Ltd., Tokyo 102-8447 (JP)
(72) Inventor: FUJII, Kohji, Kudamatsu-shi Yamaguchi 744-8611 (JP); NAKAMURA, Takuji, Kudamatsu-shi Yamaguchi 744-8611 (JP); INAZAWA, Hiroshi, Kudamatsu-shi Yamaguchi 744-8611 (JP); IKENAGA, Hiroaki, Kudamatsu-shi Yamaguchi 744-8611 (JP); IMASEKI, Toshio, Kudamatsu-shi Yamaguchi 744-8611 (JP)
(74) Representative: Vossius & Partner
(86) International application number: PCT/JP2007/060848
(87) International publication number: WO 2007/139079

(57) **Abstract**

The present invention provides a protective-film-use base material film which exhibits small birefringence and also exhibits excellent solvent resistance and excellent heat resistance at the time of heating, and a protective film laminated polarizer which laminates the protective-film-use base material film thereto. A protective-film-use base material film 10 is constituted of a non-oriented three-layered film 3 which is formed by laminating a polyester film 9 to both surfaces of a polycarbonate film 8, wherein a ratio of a film thickness of a polycarbonate film to a film thickness of a polyester film (film thickness of polycarbonate film/film thickness of polyester film) in the three-layered film constitution is set to 0.1 or more and less than 5. A protective film laminated polarizer 7 is formed by laminating the protective-film-use base material film 10 to one or both surfaces of the polarizer 3.

## Description

### Technical field

The present invention relates to a protective-film-use base material film which is laminated to a polarizer used in a liquid crystal display device, and a protective film laminated polarizer to which the protective-film-use base material film is laminated.

### Background of the Invention

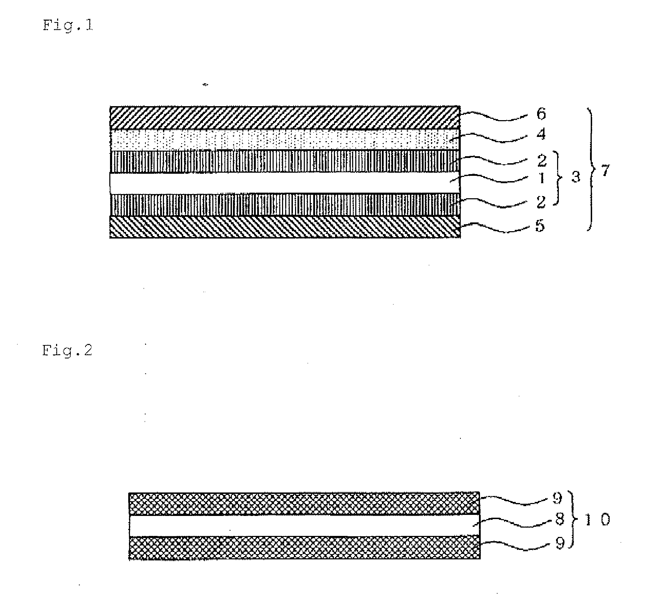

In general, a polarizer 3 used in a liquid crystal display device is formed by laminating a polarizing element protective film 2 to both surfaces of a polarizing element 1 as shown in Fig. 1. An adhesive agent layer 4 for lamination is formed on one surface of the polarizer 3, and an adhesive protective film 5 which protects the polarizing element protective film 2 which exhibits poor flaw resistance and prevents the generation of flaws or the adhesion of dusts during handling in manufacturing steps of the liquid crystal display device is laminated to another surface of the polarizer 3. Further, also to a surface of the adhesive agent layer 4, a releasing protective film 6 which prevents the generation of flaws or the adhesion of dusts during handling is laminated. The polarizer 3 is shipped in a form of a protective film laminated polarizer which is formed by laminating the protective film to both front and back surfaces thereof.

Recently, with respect to the liquid crystal display device, there has been a demand for large-sizing and higher brightness and hence, an extremely small brightness spot present on a screen of the liquid crystal display device becomes a defect. Such a brightness spot defect is attributed to a defect such as an extremely fine foreign material mixed in the polarizing element 1 or the polarizing element protective film 2 or flaws generated in the polarizing element 1 or the polarizing element protective film 2. Accordingly, it is necessary to surely remove the polarizer 3 which uses the polarizing element 1 or the polarizing element protective film 2 containing such a defect before shipping. A defect inspection of the polarizer 3 is performed using a crossed Nichol method in general. That is, when two polarizers are darkened by overlapping these polarizers such that their orientation axes intersect with each other orthogonally, a defect portion is observed as a brightness spot and hence, the defect point can be detected.

In such a defect inspection of the polarizer 3, the adhesive protective film 5 and the releasing protective film 6 which are laminated to both surfaces of the polarizer 3 are originally unnecessary and hence, it may be possible to perform the inspection by removing these films. In this case, however, the generation of flaws in the polarizer 3 or the adhesion of a foreign material to the adhesive agent layer 11 is unavoidable in handling during the defect inspection and hence, the defect inspection is performed in a state that the adhesive protective film 5 and the releasing protective film 6 are laminated to the polarizer 3.

As the adhesive protective film 5 or the releasing protective film 6, conventionally, a biaxially-stretched polyester film which exhibits excellent transparency and is sufficiently hard to almost prevent the generation of flaws has been popularly used. However, the biaxially-stretched polyester film exhibits bowing at the time of orientation by stretching and hence, the orientation is not fixed whereby when the polarizers overlap with each other orthogonally in the inspection using the crossed Nichol method, contrast of darkening is not fixed or interference color attributed to birefringence of the film appears thus giving rise to a drawback that the observation of a foreign material becomes difficult.

To overcome the drawbacks which are caused when such orientation films are used, patent document 1 proposes a method in which a three-layered non-stretched and non-oriented film having small birefringence which is formed by laminating a polyester film to both surfaces of a polycarbonate film having optical isotropy is laminated to front and back surfaces of a polarizer as a protective film.

However, inventors of the present invention have found that when respective thicknesses of a polyester film, a polycarbonate film and a polyester film which constitute respective layers of the three-layered film and a ratio of these thicknesses exceed predetermined ranges, a drawback arises. That is, when the thickness of the polycarbonate film 8 is excessively large, in the inspection of a polarizer using the crossed Nichol method which laminates the polycarbonate film 8 to upper and lower surfaces of the polarizer, there arises irregularities in contrast of darkening.

As the prior art literature relating to the present invention, there has been known a following document.
JP-A-2004-077783

### Summary of the Invention

### Problem that the Invention is to Solve

It is an object of the present invention to provide a protective-film-use base material film which exhibits small birefringence and exhibits excellent solvent resistance and excellent heat resistance (stretching orientation resistance) at the time of heating, and a protective film laminated polarizer which laminates the protective-film-use base material film thereto and enables the easy detection of an optical defect.
Further, it is another object of the present invention to provide a protective-film-use base material film which generates no irregularities in contrast of darkening at the time of performing an inspection of a polarizer using a crossed Nichol method.

### Means for Solving the Problem

(1) According to a first aspect of the present invention, there is provided a protective-film-use base material film constituted of a non-oriented three-layered film which is formed by laminating a polyester film on both surfaces of a polycarbonate film, wherein a ratio of a film thickness of a polycarbonate film to a film thickness of a polyester film (film thickness of polycarbonate film/film thickness of polyester film) in the three-layered film constitution is set to 0.1 or more and less than 5.
(2) In the protective-film-use base material film of the present invention having the constitution (1), the thickness of the polycarbonate film may be set to a value which falls within a range from 5 to 50µm.
(3) In the protective-film-use base material film of the present invention having the constitution (1) or (2), the thickness of the polyester film may be set to a value which falls within a range from 1 to 50µm.
(4) In the protective-film-use base material film of the present invention having any one of the constitutions (1) to (3), a glass transition temperature of polycarbonate is 100°C or more.
(5) In the protective-film-use base material film of the present invention having any one of the constitutions (1) to (4), a semi-crystallization time (Tc) of a polyester resin which constitutes the polyester film at the time of temperature elevation of 130°C measured using a differential scanning calorimeter may be set to a value which falls within a range from 1 to 3000 seconds.
(6) In the protective-film-use base material film of the present invention having any one of the constitutions (1) to (5), the polyester film may be made of a material selected from a group consisting of ethylene-terephthalate ethylene-isophthalate copolymer, butylene-terephthalate butylene-isophthalate copolymer, polyethylene terephthalate and polybutylene terephthalate.
(7) According to another aspect of the present invention, there is provided a protective film laminated polarizer which laminates the protective-film-use base material film to one surface or both surfaces thereof.

### Advantageous effect of the Invention

The protective-film-use base material film of the present invention is constituted of the three-layered non-oriented protective-film-use base film in which the polyester film having the thickness which falls within a predetermined range is applied to both surfaces of the polycarbonate film having optical isotropy and having the thickness which falls within a predetermined range, and the ratio of a film thickness of a polycarbonate film to a film thickness of a polyester film (film thickness of polycarbonate film/film thickness of polyester film) is set to a value which falls within a predetermined range. Further, the polyester film is formed of the film made of polyester resin having the semi-crystallization time at the time of temperature elevation which falls within the predetermined range. Accordingly, in heating and drying the protective-film-use base material film after applying the adhesive agent or the releasing agent to the film, the polyester resin is hardly crystallized and hence, there is no possibility that the birefringence attributed to crystallization is increased. In the three-layered non-stretched and non-oriented film having such constitution, the polycarbonate film can acquire the sufficient heat resistance at the time of drying and solidifying the film by heating after applying the adhesive agent or the releasing agent to the film whereby there is no possibility that the three-layered film is stretched and is oriented in the conveying direction leading to the increase of the birefringence.
Accordingly, in manufacturing the polarizer by laminating the protective-film-use base material film of the present invention to one surface or both surfaces of the polarizer and serving the protective-film-use base material film to the inspection of an optical defect using a crossed Nichol method, fixed contrast of darkening can be acquired and hence, it is possible to accurately and easily perform the inspection of the optical defect of the polarizer without being optically influenced by these films.

### Best Mode for Carrying out the Invention

An embodiment of the present invention is explained hereinafter. A protective-film-use base material film 10 is, as shown in Fig. 2, formed by laminating a polyester film 9 to both surfaces of a polycarbonate film 8 using an extrusion method or the like. With the use of the extrusion method, it is possible to acquire a three-layered non-stretched and non-oriented film which constitutes the protective-film-use base material film 10.

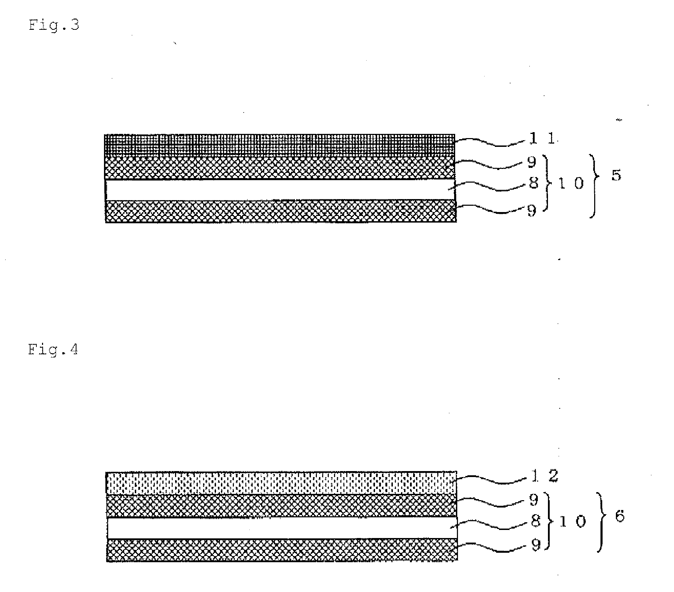

Further, with respect to an adhesive protective film 5, as shown in Fig. 3, on a surface of either one of the polyester films 9 of the three-layered protective-film-use base material film 10, an adhesive agent layer 11 is formed, wherein the adhesive agent layer 11 is formed by applying an adhesive agent diluted with an organic solvent by coating using a coating method such as a roll coating method and by drying and solidifying the adhesive agent.

As shown in Fig. 4, a releasing protective film 6 is configured such that, to either one of surfaces of the polyester films 9 of the protective-film-use base material film 10, a releasing agent diluted with an organic solvent is applied by coating using a coating method such as a roll coating method, and the coated releasing agent is dried and solidified.

The protective-film-use base material film 10 according to the embodiment is required to be colorless and transparent for enhancing the defect inspection performance of a polarizer 3. The protective-film-use base material film 10 is also required to be non-stretched and non-oriented film and to have small birefringence. Further, when the protective-film-use base material film 10 is laminated to the polarizer, the adhesive agent or the releasing agent is applied to the protective-film-use base material film 10 by coating. In this coating step, a solvent-based coating agent is used and hence, the protective-film-use base material film 10 is also required to possess the solvent resistance.
Further, after applying the adhesive agent or the releasing agent by coating, the protective-film-use base material film 10 is allowed to pass through a drying step for drying the protective-film-use base material film 10 using a heating oven. Accordingly, the protective-film-use base material film 10 is also required to possess the heat resistance so as to avoid the film from being elongated attributed to a tension applied to the film in the drying step for drying the film using the heating oven.

In this embodiment, polycarbonate which is used for forming a core layer of the protective-film-use base material film 10 exhibits excellent heat resistance and a high mechanical strength. Further, the polycarbonate preferably exhibits a glass transition temperature of 100°C or more, and more preferably exhibits a glass transition temperature of 150°C or more. When the polycarbonate exhibits the glass transition temperature of less than 100°C, the film is elongated attributed to heat and tension generated in the drying step which follows the application of the adhesive agent and the releasing agent to the film by coating thus increasing the birefringence. Accordingly, the polycarbonate which exhibits the glass transition temperature of less than 100°C is not preferable.
Polycarbonate is a carbonic acid ester resin which is derived from a bicyclic dihydric phenol group and phosgene, and exhibits a high glass transition temperature and excellent heat resistance. It is preferable to use polycarbonate which is formed by mixing one or more kinds of poly-carbonic acid ester which exhibit the glass transition temperature of 123°C to 171°C and are derived from any of bisphenol such as bis (4-oxyphenyl) methane, 1,1-bis (4-oxyphenyl) ethane, 1,1-bis (4-oxyphenyl) butane, 1,1-bis (4-oxyphenyl) isobutane, 1,1-bis (4-oxyphenyl) cyclohexane, 2,2- bis (4-oxyphenyl) propane, 2,2- bis (4-oxyphenyl) butane.

Further, as the polycarbonate films 8, it is more preferable to use a film made of polycarbonate which adopts the branch structure in which tension is large and, in applying the releasing agent to a surface of the polyester film of the three-layered film which is formed into an elongated strip shape using an extrusion method and in drying and solidifying the film by heating while conveying, is hardly elongated even when slight tension which is caused by a dead weight of the film and is necessary for conveying of the film is applied to the film.
The polycarbonate having such branch structure is obtained by polymerizing bicyclic dihydric phenols and phosgene in a state that a branching agent is present. As the branching agent, a chemical compound which includes 3 or more functional groups such as a hydroxyl group, a carboxyl group, an amino group, an imino group, a formyl group, an acid halide group, a haloformate group can be used. With respect to the polycarbonate having the branch structure, bisphenol A can be used as bicyclic dihydric phenol, 1, 1, 1- tris (4-hydroxyphenyl) ethane can be used as the branching agent, polycarbonate formed by polymerizing with p-tert-butylphenol can be used as a terminating agent. These kinds of polycarbonate having the branch structure are expensive and hence, the polycarbonate having the branch structure is used in a state that the polycarbonate is mixed into inexpensive straight-chain polycarbonate.

As shown in Fig. 1, to the polarizer 3 served to an optical defect inspection, as protective films 5, 6 for protecting the polarizer, the protective-film-use base material films are laminated.
In using the protective-film-use base material film as the protective film, to adhere the base material film to a surface of the polarizer, as shown in Fig. 3, an adhesive agent layer 11 or a releasing agent layer 12 is applied to a surface of one of polyester films 9 of the protective-film-use base material film 10 by coating.
When the protective-film-use base material film is used as the releasing protective film, the protective-film-use base material film is laminated to the polarizer 3 by way of an adhesive agent layer. Here, to enable the easy removal of the protective-film-use base material film from the polarizer 3 after performing the defect inspection, as shown in Fig. 4, the releasing agent layer 12 is applied by coating to a surface of one of polyester films 9 of the protective-film-use base material film 10.
The adhesive agent or the releasing agent is diluted in an organic solvent and is applied to the polyester film 9 by coating using a coating means such as a roll coating method and, thereafter, is dried and solidified.

The non-stretched and non-oriented polycarbonate film possesses poor solvent resistance and is shrunken or becomes turbid when an organic solvent is adhered to the film and hence, the polyester film 9 is laminated to one surface of the polycarbonate film 8 on a side to which the adhesive agent layer or the releasing agent layer is applied by coating,.
In this embodiment, to overcome a drawback similar to the above-mentioned drawback when the adhesive agent or the releasing agent extends to a non-coated surface from both sides of the polycarbonate film, the polyester film 9 is also laminated to a non-coated surface side of the polycarbonate film 8.

As a material of the polyester film 9, it is possible to use a polyester film 9 made of a polyester resin selected from a group consisting of a homopolymer which is formed by polymercondensating one kind of carboxylic acid such as terephthalic acid, isophthalic acid, orthophthalic acid, 2,5-naphtalene dicarboxylic acid, 2,6-naphthalene dicarboxylic acid, 1,4-naphtalene dicarboxylic acid, 1,5-naphthalene dicarboxylic acid, diphenyl carboxylic acid, di-phenoxy ethane dicarboxylic acid, diphenylsulphon carboxylic acid, anthracene dicarboxylic acid, 1,3-cyclopentane dicarboxylic acid, 1,3-cyclohexanedicarboxylic acid, 1,4-cyclohexanedicarboxylicacid, hexahydro terephthalic acid, hexahydro isophthalic acid, malonic acid, dimethyl malonic acid, succinic acid, 3,3-diethyl succinic acid, glutaric acid, 2,2-dimethylglutaric acid, adipic acid, 2- methyl adipic acid, trimethyl adipic acid, pimelic acid, azelaic acid, dimer acid, sebacic acid, suberic acid, dodecyl carboxylic acid and one kind of diol such as ethylene glycol, propylene glycol, hexamethylene glycol, 1, 4- cyclo hexon di-methanol, decamethylene glycol, 1, 3-propanediol, 1, 4- butanediol, 1,5-pentanediol, 1, 6- hexanediol, 2, 2- bis (4'-hydroxyphenyl ) propane, copolymer which is formed by polymercondensating one kind or more of dicarboxylic acid and two kinds or more of diols, copolymer which is formed by polymercondensating two kinds of dicarboxylic acids and one kind or more of diols, and a blend resin which is formed by blending two kinds or more of these homopolymers and/or copolymers.

The polyester film 9 is required to satisfy the following two contradictory properties. That is, to prevent the polyester film 9 from being shrunken even when an organic solvent which dilutes an adhesive agent or a releasing agent therein is adhered to the polyester film 9, it is preferable for polyester film 9 to possess a high crystallization rate. On the other hand, it is preferable for polyester film 9 to possess a low crystallization rate in view of a following phenomenon. That is, when the polyester film 9 is made to pass through a heating oven while being applied with a necessary small tension to convey the film for drying and solidifying the polyester film 9 after the adhesive agent or the releasing agent is applied to the polyester film 9 by coating, the polyester film 9 is stretched in the conveying direction due to the applied force and exhibits the uniaxial orientation, and this uniaxial orientation is thermally fixed when the polyester film 9 passes through the heating oven and causes oriented crystals thus preventing the generation of birefringence in the film. As the polyester resin which constitutes polyester film 9 capable of satisfying these contradictory properties, a polyester region made of one kind of or a blend of two kinds or more of ethylene-terephthalate · ethylene-isophthalate copolymer, butylene-terephthalate butylene-isophthalate copolymer, polyethylene terephthalate, and polybutylene terephthalate which exhibit a semi-crystallization time (Tc) of 1 to 3000 seconds at 130°C at the time of temperature elevation measured by a differential scanning calorimeter, (Tc) can be used.

When the semi-crystallization time (Tc) is less than 1 second, time necessary for crystallizing polyester becomes considerably short (the crystallization rate becoming extremely high). When the film is formed using such polyester, there arises a phenomenon that polyester is crystallized to a considerable extent within a short time from the discharge of the molten film from the T-die for cooling by casting rolls (cooling rolls).
While the polyester film whose crystallization progresses to a considerable extent has an advantage that the polyester film has the sufficient resistance against an organic solvent at the time of applying an adhesive agent or a releasing agent by coating, there exists possibility that after the formation of the film, the film becomes turbid due to the influence of extremely large crystallization.
Further, the oriented crystals are liable to be easily generated in the drying step after coating thus leading to the occurrence of non-uniform birefringence and, eventually, there arises a drawback that darkening cannot be obtained at the time of inspecting the polarizer.
On the other hand, when the semi-crystallization time (Tc) exceeds 3000 seconds, the crystallization of polyester requires a considerably long time (the crystallization rate being extremely slow) and hence, when a film is formed using such polyester, polyester is not sufficiently crystallized within a short time from the discharge of the molten film from the T-die to cooling of polyester by the casting rolls (cooling rolls). As a result, the film exhibits excellent transparency and the crystallization hardly progresses even in the drying step at the time of coating and hence, the non-uniform birefringence hardly occurs.
On the other hand, polyester which exhibits no remarkable progress of crystallization therein, contrary to the polymer whose semi-crystallization time (Tc) is less than 1 second, exhibits poor resistance against an organic solvent and hence, when polyester is in contact with the organic solvent, there arises a drawback that the film is shrunken, a surface of the film is corroded or becomes turbid. Accordingly, there also arises a drawback that coating of the releasing agent or the adhesive agent becomes difficult.
As described above, polyester used in the present invention causes the drawback in both of the case that the semi-crystallization time (Tc) is excessively small and the case that the semi-crystallization time (Tc) is excessively large and hence, it is necessary to use the semi-crystallization time (Tc) which causes no problem in practical use. Accordingly, the semi-crystallization time (Tc) is set to a value which falls within a ranged from 1 to 3000 seconds (Tc = 1 to 3000 seconds).

It is preferable that the thicknesses of the above-mentioned polycarbonate film 8 and the polyester film 9 which constitute the three-layered film are respectively set to values which fall within following ranges. That is, it is preferable that the film thickness of the polycarbonate film 8 is set to a value which falls within a range from 5 to 50µm. When the film thickness of the polycarbonate film 8 is less than 5µm, the polycarbonate film 8 cannot possess the heat resistance (stretched orientation resistance) at the time of applying the adhesive agent or the releasing agent to the three-layered film by coating, while when the film thickness of the polycarbonate film 8 exceeds 50µm, the irregularities are liable to be easily generated in contrast of darkening in the inspection of the polarizer using a crossed Nichol method in which the three-layered film is laminated to upper and lower surfaces of the polarizer.

That is, it is preferable that the film thickness of the polyester film 9 laminated to both surfaces of the polycarbonate film 8 is set to a value which falls within a range from 1 to 50µm. When the film thickness of the polyester film 9 is less than 1µm, the thickness is not sufficient to impart the solvent resistance to the polycarbonate film 8, while when the film thickness of the polyester film 9 exceeds 50µm, it is difficult to keep a shape of the three-layered film when the polycarbonate film 8 is dried and solidified by heating after applying the releasing agent by coating.

Further, in the above-mentioned three-layered film, it is preferable that while setting the thicknesses of the polycarbonate film 8 and the polyester film 9 to the values which fall within the above-mentioned ranges, a ratio of the film thickness of the polycarbonate film to the film thickness of the polyester film (film thickness of polycarbonate film/film thickness of polyester film) in the three-layered film constitution is set to 0.1 or more and less than 5. When the thickness ratio falls outside this range, the irregularities are generated under a crossed Nichol method thus giving rise to a trouble in the inspection of a defect of the polarizer. Further, when the thickness ratio falls below a lower limit of this range, it is difficult to ensure the sufficient heat resistance necessary for holding the shape of the three-layered film at the time of heating for drying and solidifying after applying the adhesive agent or releasing agent by coating.

The above-mentioned three-layered film can be manufactured using a known film manufacturing method such as a co-extrusion method. Further, the three-layered film is manufactured in an elongated strip shape, and the adhesive agent or the releasing agent is applied to the three-layered film while the three-layered film is wound around a coiler or is unwound from the coiler. Here, when either one of or both of the polyester films 9 of the three-layered film contain 0.05 to 3 % by weight of a lubricant made of silica powder having a particle size of 0.1 to 3.0µm or the like, a film winding operation and a film unwinding operation can be smoothly carried out. When these films do not contain the lubricant, particularly, the film winding operation on the coiler becomes extremely difficult. Provided that the particle size and the content of the lubricant fall within the above-mentioned ranges, there is no possibility that the detection of an optical defect of the polarizer 3 is adversely influenced.

The adhesive agent layer 11 which is applied to the surface of the polyester film of the above-mentioned three-layered film may be formed of an acrylic adhesive agent or the like. It is preferable to set a thickness of a solid content of the adhesive agent layer after coating and drying to a value which falls within a range from 1 to 50µm.
As a material of the releasing agent layer 12, a silicone releasing agent, higher fatty acid, higher fatty acid amide, higher fatty acid ester, metallic soap, fluorocarbon or the like can be used. A solution in which any one of the above-mentioned material is diluted by dissolving or dispersing the material in an organic solvent such as toluene, ethyl acetate, methyl ethyl ketone (butanone) is applied to the surface of the polyester film using a coating method such as an emulsion roll coating method and, thereafter, the polyester film coated with the solution is made to pass through a heating oven so as to dry and solidify the material in the solution to form the releasing agent. It is preferable to set a thickness of the solid component of the releasing agent after drying and solidifying to a value which falls within a range from 0.005 to 2µm.
In this manner, by laminating the protective-film-use base material film to the polarizer 3 by way of the releasing agent layer 12 as the protective film 6 for protecting the polarizer, it is possible to easily peel-off and remove the protective-film-use base material film at the time of mounting the polarizer 3 on a liquid crystal display device after the defect inspection of the polarizer.

### (Embodiment)

Hereinafter, the present invention is explained in detail in conjunction with an embodiment.

### (Forming of three-layered film)

Using a co-extrusion method, elongated-strip-shaped non-stretched resin films (sample numbers 1 to 8) each constituted of a three-layered film formed by laminating a polyester layer shown in Table 1 to both surfaces of a polycarbonate layer shown in Table 1 are prepared. The semi-crystallization times in Table 1 indicates the semi-crystallization time of resins measured using a differential scanning calorimeter (DSC-20, manufactured by SII Nanotechnology Inc.) at 130°C when the temperatures of the resins are increased at a heating rate of 10°C/minute from the normal temperature.

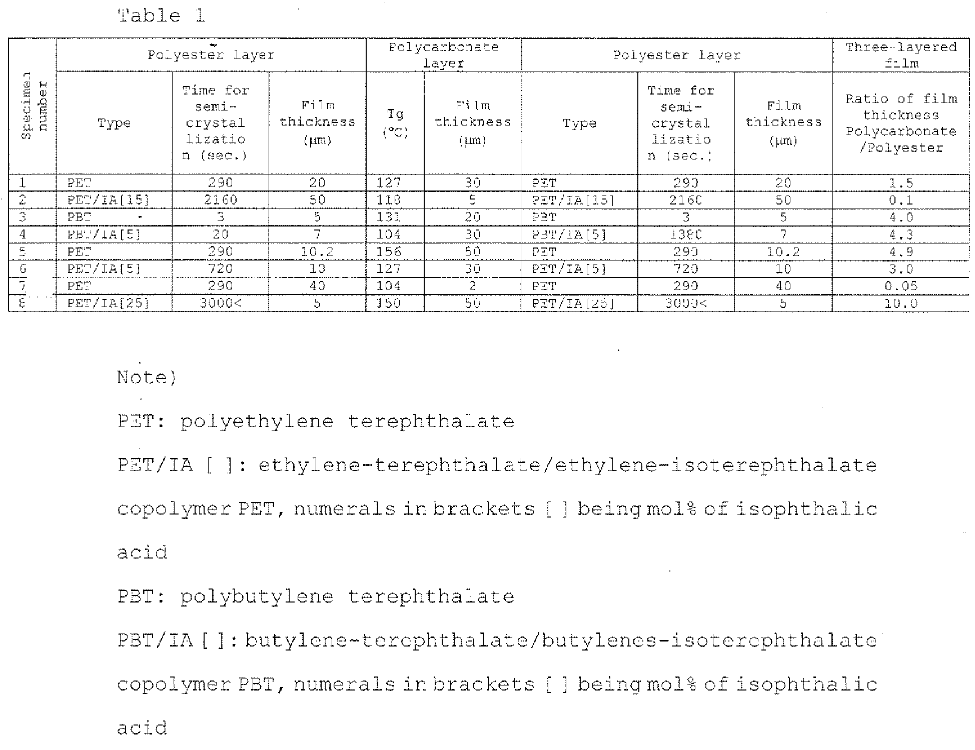

### (Shape stability evaluation)

The elongated-strip-shaped three-layered films of the sample numbers 1 to 8 shown in Table 1 which are wound in a coil shape after film-forming are paid off by way of a plurality of conveying rolls and are conveyed, are made to pass through an oven heated to 100°C and, thereafter, using an automatic birefringence analyzer (KOBRA-WPR manufactured by Oji Scientific Instruments), a phase difference value which becomes an index of birefringence of each film is measured. Thereafter, the shape stability (stretching-resistance orientation property) of the three-layered film after film forming is evaluated based on the following criteria.
Good: phase difference being less than 10nm
Bad: phase difference being equal to or more than 10nm

### (Solvent resistance evaluation)

Toluene is applied to surfaces of three-layered films of the sample numbers 1 to 8 by coating using a bar coater and the three-layered film are dried with hot air of 100°C. Thereafter, the degree of the change in color of the film surface of each three-layered film is observed and the solvent resistance is evaluated based on the following criteria.
Good: No generation of color change or deformation observed. Bad: Generation of color change or deformation which causes a problem in practical use observed.
The evaluation result of these films is shown in Table 2. As shown in Table 2, the three-layered films of the present invention almost do not exhibit the stretched orientation even when the three-layered film is conveyed while being heated, and the three-layered films favorably maintain the non-oriented shape. Further, the three-layered film exhibit excellent solvent resistance.

### (Unevenness evaluation)

Each one of three-layered films of the sample numbers 1 to 8 is laminated to a polarizer and two pieces of film laminated polarizers having a square size of 300mm are cut out from the film laminated polarizer. The two pieces of film laminated polarizers are made to overlap with each other such that orientation axes of polarization films intersect with each other orthogonally. Thereafter, a backlight is irradiated to two pieces of film laminated polarizers, and presence/non-presence of optical unevenness is evaluated based on the following criteria.
Good: No optical unevenness observed.
Bad: Optical unevenness which causes a problem in practical use observed.
No optical irregularities are observed with respect to the protective-film-use base material film of the present invention. Accordingly, it is evaluated that there is no problem at all even when the protective-film-use base material film of the present invention is served to the inspection of the polarizer in a state that the protective-film-use base material film is laminated to front and back surfaces of the polarizer.

**Table 2**

| Sample number | Shape stability | Solvent resistance | Irregularities | Classification |
|---|---|---|---|---|
| 1 | Good | Good | Good | Present invention |
| 2 | Good | Good | Good | Present invention |
| 3 | Good | Good | Good | Present invention |
| 4 | Good | Good | Good | Present invention |
| 5 | Good | Good | Good | Present invention |
| 6 | Good | Good | Good | Present invention |
| 7 | Bad | Good | Bad | Comparison example |
| 8 | Bad | Bad | Bad | Comparison example |

### [Industrial Applicability]

The protective-film-use base material film of the present invention is constituted of the three-layered film which is formed in the following manner. The polyester film whose semi-crystallization time measured by the DSC at 130°C during the elevation of temperature of the resin falls within a range from 1 to 3000 seconds is laminated to both surfaces of a polycarbonate film having optical isotropy and a thickness of 5 to 50µm such that the ratio of the film thickness of the polycarbonate film with respect to the thickness of the polyester film is in a range equal to or more than 0.1 and less than 5. The polyester film is hardly crystallized when the three-layered film is dried by heating after applying the adhesive agent or the releasing agent to the three-layered film by coating thus generating no increase of birefringence caused by crystallization and the industrial applicability of the three-layered film is extremely high.
Further, since the protective-film-use base material film constituted of the three-layered non-oriented film of the present invention exhibits sufficient heat resistance property even when the protective-film-use base material film is dried and solidified by heating after applying the adhesive agent or the releasing agent by coating, the three-layered film is not stretched in the conveying direction, and the birefringence is not increased and hence, the protective-film-use base material film can maintain the favorable non-orientation property.
Further, the protective-film-use base material film possesses excellent solvent resistance and hence, even when the adhesive agent or the releasing agent diluted in an organic solvent is applied to the surface of the protective-film-use base material film by coating, there is no possibility that the color of the surface of the film is changed or the surface of the film is deformed by bulging.
Accordingly, when the protective-film-use base material film is served to the inspection of an optical defect of the polarizer, it is possible to accurately and easily perform the inspection of optical defect of the polarizer, thus the protective-film-use base material film exhibits the excellent industrial applicability.

### [Brief Explanation of the Drawings]

Fig. 1 is a schematic cross-sectional view showing one example of the constitution of a protective film polarizer;
Fig. 2 is a schematic cross-sectional view showing one embodiment of a protective-film-use base material film of the present invention;
Fig. 3 is a schematic cross-sectional view showing one embodiment of the protective-film-use base material film of the present invention; and
Fig. 4 is a schematic cross-sectional view showing one embodiment of the protective-film-use base material film of the present invention.

### [Description of Reference Numerals and Signs]

- 1:: polarizing element
- 2:: polarizer protective film
- 3:: polarizer
- 4:: adhesive agent layer
- 5:: protective film
- 6:: protective film
- 7:: protective film laminated polarizer
- 8:: polycarbonate film
- 9:: polyester film
- 10:: protective-film-use base material film
- 11:: adhesive agent layer
- 12:: releasing agent layer

## Claims

1. A protective-film-use base material film constituted of a non-oriented three-layered film which is formed by laminating a polyester film on both surfaces of a polycarbonate film, wherein
a ratio of a film thickness of a polycarbonate film to a film thickness of a polyester film (film thickness of polycarbonate film/film thickness of polyester film) in the three-layered film constitution is set to 0.1 or more and less than 5.

2. A protective-film-use base material film according to claim 1, wherein the thickness of the polycarbonate film is set to a value which falls within a range from 5 to 50µm.

3. A protective-film-use base material film according to claim 1 or 2, wherein the thickness of the polyester film is set to a value which falls within a range from 1 to 50µm.

4. A protective-film-use base material film according to any one of claims 1 to 3, wherein a glass transition temperature of polycarbonate is 100°C or more.

5. A protective-film-use base material film according to any one of claims 1 to 4, wherein a semi-crystallization time (Tc) of a polyester resin which constitutes the polyester film at the time of temperature elevation of 130°C measured using a differential scanning calorimeter is set to a value which falls within a range from 1 to 3000 seconds.

6. A protective-film-use base material film according to any one of claims 1 to 5, wherein the polyester film is made of a material selected from a group consisting of ethylene-terephthalate · ethylene-isophthalate copolymer, butylene-terephthalate · butylene-isophthalate copolymer, polyethylene terephthalate and polybutylene terephthalate.

7. A protective film laminated polarizer which laminates the protective-film-use base material film to one surface or both surfaces of a polarizer.
